# EUROPEAN PATENT APPLICATION

(11) **EP 4 542 694 A2**
(43) Date of publication of application: **23.04.2025**
(21) Application number: 24214258.6
(22) Date of filing: 20.11.2024
(51) Int. Cl.: H01M 8/0662, H01M 8/12

(54) **SOLID OXIDE FUEL CELL SYSTEM CHROMIUM POISONING PREVENTION MATERIALS**

(30) Priority: 16.10.2023 US 202318487636
(71) Applicant: Robert Bosch GmbH, 70469 Stuttgart (DE)
(72) Inventor: FLORENSKI, Jan, 83022 Rosenheim (DE); KORNBLUTH, Mordechai, Brighton, 02135 (US)
(74) Representative: Isarpatent

(57) **Abstract**

A solid oxide fuel cell (SOFC) system includes a SOFC stack, a component located upstream from the SOFC stack and downstream from a heat exchanger, the component including a bulk portion; and a surface portion directly adjacent the bulk portion and having a combination of a sulfur getter material and a chromium getter material, the sulfur and chromium getter materials having different chemical compositions, the chromium getter being an absorber of hexavalent gaseous chromium and the sulfur getter being an absorber of sulfur-containing gaseous species.

## Description

### TECHNICAL FIELD

The present disclosure relates to electrochemical systems such as solid oxide fuel cell (SOFC) system, prevention of chromium and sulfur contamination and/or poisoning of the SOFC stack, especially minimizing release of previously bound hexavalent chromium, and methods of producing and using the same.

### BACKGROUND

High temperature electrochemical cells such as SOFC, like most fuel cell technologies, are at the forefront of power generation technology as they benefit the public and the planet by minimizing emissions such as NOₓ. Compared to proton exchange membrane fuel cell (PEMFC) that may be applicable for automotive applications, SOFCs are typically intended for stationary applications. SOFCs typically feature a relatively high combined heat and power efficiency, long-term stability, fuel flexibility, and low emissions. But SOFC devices run at relatively high operating temperatures, generating harsh operating conditions which have been a challenge from materials perspective. The harsh conditions also generate a need to prevent formation of any undesirable gaseous species in the system.

### SUMMARY

In one or more embodiments, solid oxide fuel cell (SOFC) system is disclosed. The system includes a SOFC stack and a component located upstream from the SOFC stack and downstream from a heat exchanger. The component may include a bulk portion and a surface portion adjacent the bulk portion and having a combination of a sulfur getter material and a chromium getter material, the sulfur and chromium getter materials having different chemical compositions, the chromium getter being an absorber of hexavalent gaseous chromium and the sulfur getter being an absorber of sulfur-containing gaseous species. The chromium getter material may not be a sulfur absorber. The sulfur getter material may a sulfur and chromium absorber. The sulfur getter material may have a lower affinity to chromium than sulfur. Presence of the sulfur getter material within the combination may render the chromium getter material an irreversible chromium absorber. The sulfur getter material may include one or more than one composition having formula (I):

MₓC_{z}O_{y} (I),

where M is an alkaline earth metal or alkali metal,
x is any number between 1 and 3,
y is any number between 1 and 4,
z is any number between 0 and 1.

The sulfur getter material may include one or more than one composition having formula (II):

LiₐA_{b}MₓO_{y} (II),

where
A is a transition metal,
M is a metalloid or reactive non-metal,
a is any number between 1 and 4,
b is any number between 0 and 2,
x is any number between 0.1 and 3,
y is any number between 1 and 6.

The sulfur getter material may include CaO, MgO, CaCOs, MgCO₃, CaCrO₄, MgCrO₄, MgCr₂O₄, or their combination, and the chromium getter material includes BaO, SrO, BaCOs, SrCOs, BaCrO₄, SrCrO₄, or their combination.

In another embodiment, a SOFC component is disclosed. The component may include a bulk portion and a surface portion having a combination of a sulfur absorber material and a chromium absorber material, the sulfur and chromium absorber materials having different chemical compositions from one another, the combination of the absorber materials resulting in an irreversible binding of hexavalent gaseous chromium into a solid form within the component, the chromium absorber material being arranged in direct contact with the bulk portion and the sulfur absorber material. The sulfur absorber material and the chromium absorber material may form detectably discrete layers. The chromium absorber may be sandwiched between the bulk portion and the sulfur absorber. The sulfur absorber and the chromium absorber may be located on the bulk portion in an alternating order. The sulfur absorber may form a zone upstream of the chromium absorber. The sulfur absorber may include a carbonate or an oxide having formula (I):

MₓA_{z}O_{y} (I),

where
M is an alkaline earth metal or alkali metal,
A is C or Cr,
x is any number between 1 and 3,
y is any number between 1 and 4,
z is any number between 0 and 1.

The sulfur getter material may include CaO, MgO, CaCOs, MgCOs, CaCrO₄, MgCrO₄, MgCr₂O₄, or their combination, and the chromium getter material includes BaO, SrO, BaCOs, SrCOs, BaCrO₄, SrCrO₄, or their combination.

In yet another embodiment, a method of resisting release of hexavalent gaseous chromium from a chromium getter material is disclosed. The method may include forming a synergistic combination of getter materials to ensure irreversible binding of gaseous hexavalent chromium within a SOFC system by providing a chromium getter material within the system, upstream from a cathode and providing a sulfur getter material within the system, adjacent the chromium getter material; and providing air to the system, increasing a temperature of the air, and contacting the air with the chromium getter and the sulfur getter such that the chromium getter absorbs gaseous hexavalent chromium into a solid form and the sulfur getter absorbs sulfur-containing gaseous species into a solid form to prevent a reaction of the sulfur-containing gaseous species with the chromium absorbed into the chromium getter. The resisting may be operative throughout the SOFC system lifetime. The method may also include arranging the sulfur getter upstream from the chromium getter. The forming of the synergistic combination may include providing a chromium getter of a different chemical composition than the sulfur getter. The method may also include arranging the chromium and sulfur getter material downstream from a heat exchanger.

### BRIEF DESCRIPTION OF THE DRAWINGS

Figure 1 is a schematic depiction of a non-limiting example of a SOFC;
Figure 2 is a schematic example of a SOFC stack;
Figure 3A is a schematic depiction of reactions of a traditional SOFC Cr getter material in the beginning of life and middle/end of life of the SOFC system;
Figure 3B is a schematic depiction of a non-limiting example of herein-disclosed first and second getter materials in the beginning of life and middle/end of life of the SOFC system;
Figure 3C is a schematic depiction of an alternative non-limiting example of herein-disclosed first and second getter materials in the beginning of life and middle/end of life of the SOFC system;
Figure 4A is a schematic depiction of a non-limiting example SOFC system including a component having a surface portion including the first/second getter materials disclosed herein;
Figure 4B is a schematic depiction of an alternative non-limiting example SOFC system including a component having a surface portion including the first/second getter materials disclosed herein;
Figures 5A-5D are schematic depictions of non-limiting example arrangements of the first and second getter materials within the component of the SOFC system disclosed herein;
Figure 6A is a scatterplot summarizing results of Screening 1 of the Experimental section regarding getter material candidates;
Figure 6B is a decision tree analysis showing results relating to the scatterplot of Fig. 6A;
Figure 7A is a scatterplot summarizing results of Screening 2 of the Experimental section regarding getter material candidates;
Figures 7B and 7C are a decision tree analysis showing results relating to the scatterplot of Fig. 7A;
Figure 8A is a scatterplot summarizing results of Screening 3 of the Experimental section regarding getter material candidates;
Figures 8B and 8C are a decision tree analysis showing results relating to the scatterplot of Fig. 8A; and
Figure 9 is a plot of reaction probability of SOₓ species with various getter compounds identified in the screenings of the Experimental section.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, *i.e.* the range from 95 to 105. Generally, when the term "about" is used, it can be expected that similar results or effects according to the disclosure can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4.... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (e.g., pressure, pH, flow rates, *etc.)* can be practiced with plus or minus 50 percent of the values indicated rounded to or truncated to two significant figures of the value provided in the examples. In a refinement, concentrations, temperature, and reaction conditions (e.g., pressure, pH, flow rates, *etc.)* can be practiced with plus or minus 30 percent of the values indicated rounded to or truncated to two significant figures of the value provided in the examples. In another refinement, concentrations, temperature, and reaction conditions (e.g., pressure, pH, flow rates, *etc.*) can be practiced with plus or minus 10 percent of the values indicated rounded to or truncated to two significant figures of the value provided in the examples.

For all compounds expressed as an empirical chemical formula with a plurality of letters and numeric subscripts (e.g., CH₂O), values of the subscripts can be plus or minus 50 percent of the values indicated rounded to or truncated to two significant figures. For example, if CH₂O is indicated, a compound of formula C_{(0.8-1.2)}H_{(1.6-2.4)}O_{(0.8-1.2)}. In a refinement, values of the subscripts can be plus or minus 30 percent of the values indicated rounded to or truncated to two significant figures. In still another refinement, values of the subscripts can be plus or minus 20 percent of the values indicated rounded to or truncated to two significant figures.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps.

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description, and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Fuel cells, or electrochemical cells, that convert chemical energy of a fuel (e.g. H₂ and also other types of hydrocarbons for SOFCs) and an oxidizing agent into electricity through a pair of electrochemical half (redox) reactions, have become an increasingly popular alternative to traditional batteries. Several different types of fuel cells have been developed to cover applications such as automotive, portable power systems, smartphones, combined heat and power, or backup power generation.

High temperature electrochemical cells, such as those having operating temperature between about 500 and 1000°C, have several advantages over other types of fuel cells. Example high temperature electrochemical cells may be SOFCs and MCFCs. One such advantage is fuel flexibility of the SOFC. For example, a SOFC may reform methane or use carbon monoxide as a fuel. A SOFC may also better tolerate fuel impurities such as ammonia and chlorides. Sulfur-bearing contaminants, though, remain to be problematic. Additionally, the SOFC cathode reaction is heat-absorbing, thus tending to cool the cell down, which may reduce the need for cooling air.

High temperature electrochemical cells typically feature a relatively high combined heat and power efficiency, long-term stability, fuel flexibility, low emissions, and low cost. High temperature electrochemical cells may operate in temperature ranges of about 750 to 1300 K or about 500 to 1000°C, which may lead to accelerated reactions, but the high temperature may trigger a faster degradation of the components and subcomponents such as interconnects, electrodes, and others. The degradation of the high temperature electrochemical cell components and subcomponents may in turn lead to a drop of the overall cell performance in its lifetime.

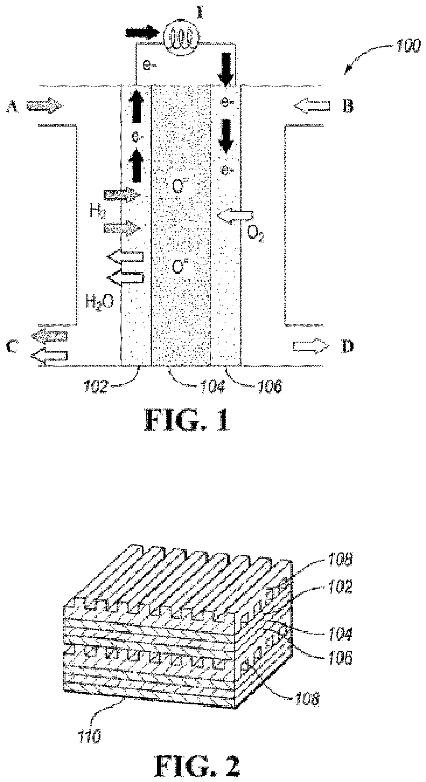

SOFCs are devices which produce electricity directly from oxidizing a fuel. Since fuel cells are characterized by their electrolyte material, the SOFC relates to solid oxide or ceramic electrolyte. A schematic depiction of a non-limiting example of a SOFC is in Fig. 1. As can be seen in Fig. 1, the cell 100 includes an anode 102, an electrolyte 104, and a cathode 106. The cell 100 is provided pure hydrogen as fuel at point A on the anode side and air at point B on the cathode side. In another embodiment, other type of hydrocarbons such as methane may be used at point A in the cell 100. At the cathode, oxygen present in the air combines with electrons to form oxygen ions, which diffuse through the electrolyte. At the anode, the ions combine with hydrogen to form water. The additional electrons released in the reaction are diverted to produce electricity. Excess fuel and water leave the cell at point C on the anode side and unused gases are expelled out at point D on the cathode side. The cells such as the cell depicted in Fig. 1 are typically combined into stacks to provide a desired amount of voltage.

A non-limiting schematic depiction of a portion of a SOFC stack 110 is depicted in Fig. 2. As can be seen, Fig. 2 shows spatial distribution of the anode 102, electrolyte 104, and the cathode 106 as well as an interconnect 108 within the SOFC cells and the stack. The interconnect 108 is a SOFC component which is in contact with both the anode 102 and the cathode 106. The interconnect 108, and other components, face a number of challenging environmental conditions in a SOFC stack. For example, the presence of O₂/air at the cathode side brings on corrosive conditions which may negatively influence the SOFC components. If the components were not protected, the components' surfaces could suffer from undesirable corrosion and/or metal evaporation.

The components are typically made from a metal. The metal is typically a steel. The steel may be stainless steel. Ferrous materials such as steel may be naturally passivated by surface oxides, also known as rust, including Fe₂O₃ and several other metal oxide species. Steel is one of most commonly used materials to fabricate fuel cell components such as PEMC bipolar plate, SOFC interconnect, end plate, gas storage tank, pipe, valve, *etc.*

To prevent or lessen the degree of corrosion, high chromium steels with Cr in excess of 12 wt.% have been used because an addition of Cr to a steel composition gives rise to formation of a desirable chromium oxide surface film which provides corrosion resistance to the stainless steel. Preserving the Cr content within the subcomponent may thus contribute to a prolonged cell lifetime by improving corrosion resistance. To achieve preservation of the Cr content, various coatings have been developed. For example, the coatings may include Co₃O₄ spinel. The coatings may reduce outward diffusion of Cr or help with reducing oxidation rate for steel the component is made from.

High chromium steels such as 1.4509, AISI 441, X2CrTiNb18 steel may contain about 18 wt.% of Cr. Such stainless steel typically has Cr₂O₃ oxide materials at the surface. During the high temperature operation of an electrochemical system, Cr₂O₃ may react with oxygen (O₂) and/or water (H₂O) that may form chromium vapors as described in Reactions 1-3 below:

Cr₂O₃ + 1.5O₂ → CrO₃ (Reaction 1)

2Cr₂O₃ + O₂ + 4H₂O → 4CrO(OH)₂ (Reaction 2)

Cr₂O₃ + 1.5O₂ + 2H₂O → 2CrO₂(OH)₂ (Reaction 3)

These Cr vapors, namely, CrO₃, CrO(OH)₂, and CrO₂(OH)₂, may further react with oxide materials (*e*.*g*., cathode) in various cell components that may further poison and thus reduce the fuel cell longevity, performance, or both. For example, the Cr vapors may lead to cathode degradation which may affect long-term stability of the fuel cell stacks.

The chromium content of the cells has been preserved with materials utilized to prevent chromium entering the cathode and poisoning it, especially at elevated temperatures. Such materials have typically been implemented at the location B within the cell, shown in Fig. 1.

Among the materials is SrNiOₓ-coated Al₂O₃ fiber which functions as a "chromium getter" material. A "chromium getter" material relates to a material which may capture the undesirable chromium vapors so that chromium present in the fuel cell system does not reach the stack, and does not increase degree of cathode and/or other degradation. Similarly, SrCoOs has been identified as a chromium getter. But both materials have limitations such as toxicity due to presence of Co or Ni. Additionally, the materials' performance and effectiveness need improvement. Hence, the materials in their known form may not be the most suitable for high temperature electrochemical cell applications.

Yet, preservation and capture of the chromium content, especially gases, is important throughout the entire cell and stack, for example also at the cathode and anode exhaust sides, locations C and D in Fig. 1.

After chromium absorption, chromium saturated getters are exposed over their remaining lifetime to different impurities in the gas stream. Especially gaseous forms of sulfur can enter the SOFC system as impurities in the ambient air, fuel, or by release from other components. Through an exchange reaction at the getter, sulfur exposure of Cr pre-loaded Cr getters might, depending on the material, lead to a release of chromium from the getter. Thus, even low concentrations of sulfur, although not leading directly to significant stack degradation, may lead to release of previously captured chromium, which in turn could extensively degrade the stack.

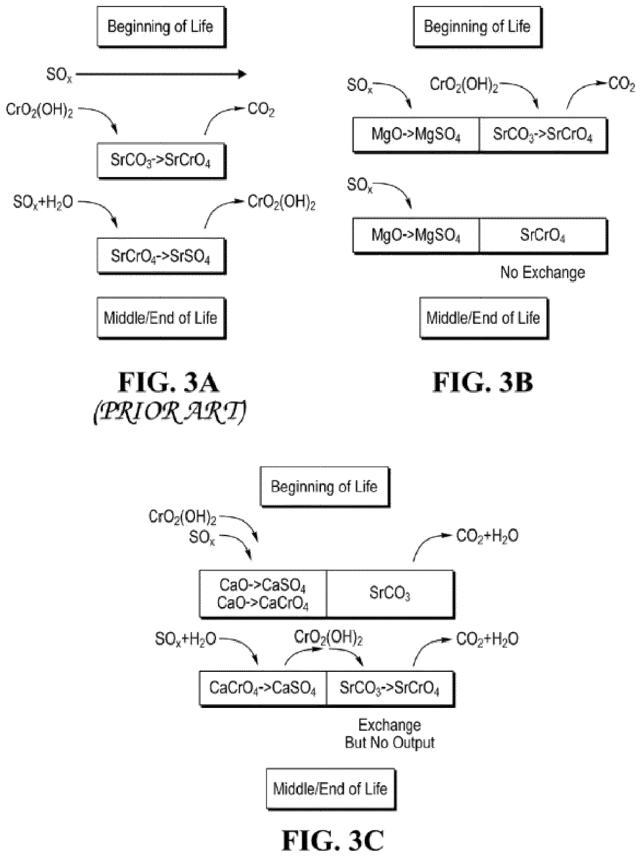

For example, sulfur may trigger emission of Cr from a chromium getter such as SrCOs in the middle and end of the system life, as is schematically shown in Fig 3A. Towards the middle to end of the SOFC system life, the concentration of chromium in the gas phase decreases, while sulfur concentration does not change significantly over the lifetime of the system, which may in turn trigger increased release of Cr which was previously captured by Cr getters. As is shown in Fig. 3A, gaseous SOₓ triggers formation of SrSO₄ and release of CrO₂(OH)₂, which is known to negatively affect the SOFC cell and system significantly more than sulfur. Thus, with the existing Cr getters, it has been a challenge to stabilize the absorbed impurities throughout the length of SOFC operation and its lifetime, and presence of some chromium getters may trigger release of chromium from the getters after initial operation of the system because the impurities in the air may release Cr previously bound by the getter.

Thus, there is a need to develop a material and method for preserving Cr content in the SOFC system, stabilize and irreversibly absorb impurities within the system, and prevent sulfur-mediated chromium release within the SOFC system, specifically from chromium getter materials.

In one or more embodiments disclosed herein, an electrochemical system is disclosed. The system may be a high temperature electrochemical system with an operating temperature of about 500-1000°C. The system may include a SOFC or a cell that converts chemical energy of a fuel and oxidant directly into electrical energy.

The system may include a stack having at least a first cell and a second cell. The stack may have additional cells, up to several dozens or hundreds of individual cells arranged in the stack. The stack may have a planar geometry, tubular geometry, or modified planar fuel cells design geometry. The stack may include 2, 3, 4, 5, 6,7, 8, 9, 10, 15, 20, 25, 30, 35, 40, 45, 50, 55, 60, 65, 70, 75, 80, 85, 90, 95, 100, or more cells.

The system is structured to resist/prevent/mitigate/minimize/reduce release of sulfur-mediated chromium into the stack, resist/prevent/mitigate/minimize/reduce overall gaseous chromium influx into the stack and content of gaseous chromium in the stack/cell/system.

The system may thus include one or more components having a material including a getter material. The getter is a material that captures an element from gaseous species such as SOₓ or hexavalent Cr and binds the species into a solid form. The binding may be irreversible. The binding may be provided via sorption, absorption, adsorption, or a combination thereof. A getter may be also called an absorber.

The getter may include a S getter, a Cr getter, or both. The sulfur getter may not be a chromium getter. The sulfur getter may be a chromium getter at the same time as sulfur getter. The sulfur getter may have preferential affinity towards sulfur rather than chromium. The chromium getter is a material that captures gaseous hexavalent chromium and binds it into a solid form. Non-limiting example materials and their function as sulfur/chromium getters within the SOFC system are schematically shown in Figs. 3B and 3C and described below.

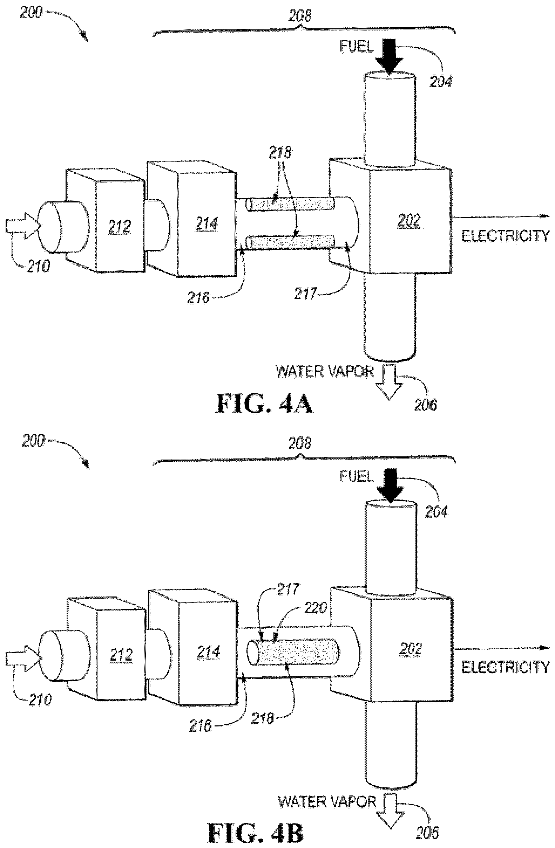

The getter material may be included in the system upstream from the stack, cell, cathode of a cell/stack, or both. The getter material may be placed prior to the cathode air stream reaching a cathode within the system. The getter material may be placed in the cathode air stream. The getter material may be placed downstream from a heat exchanger, one or more filters, cold air inlet, or a combination thereof. The getter material may be placed within one or more components of the hotbox or the high temperature components of the SOFC system. The hotbox may integrate such components into one unit. An example component may be a pipe, tube, duct, lead, line, canal, channel, carrier, conduit, conveyer, main, or vent leading hot air from a heat exchanger into the stack. The component may be a gas carrying component, gas path component. A schematic depiction of a non-limiting example SOFC system is shown in Figs. 4A and 4B.

A non-limiting example SOFC system 200 is shown in Fig. 4A. The system 200 includes the hotbox 208. The system 200 includes a stack 202 with a fuel inlet 204 and water vapor outlet 206. The system 200 may include a cold air inlet 210, a filter 212, a heat exchanger 214, a pipe 216 leading the hot air from the heat exchanger 214 to the stack 202. The system 200 may include a different component structured differently than the depicted pipe 216 leading air of elevated temperature from the heat exchanger 214 to the stack 202. The component 216 may include the getter or absorber material 218 disclosed herein.

The hot box 208 and/or component 216 may include a bulk material 217. The bulk material 217 may include steel. The steel may be a stainless steel. The steel may be a high chromium steel due to its high electronic conductivity, corrosion resistance, and machinability. The steel may have Cr content of about or at least about 10, 11, 12, 13, 14, 15, 16, 17, 18, 19, 20, 21, 22, 23, 24, 25, or more wt.%, based on the total weight of the steel. The stainless steel may be a stainless steel having a composition SS 304, SS 316, SS 316L, AISI 441, or the like.

SS 304 contains about 18 wt.% Cr and about 8 wt.% nickel (Ni), while SS 316 contains about 16% Cr, about 10 wt.% Ni, and about 2 wt.% molybdenum (Mo). The difference between SS 316 and SS 316L stainless steel is that 316L has about 0.03 wt.% max carbon (C) and is good for welding whereas SS 316 has a mid-range level of C. The stainless steel may include Cr, Ni, Mo, and/or other elements such as carbon (about 0.03 wt.%), manganese (about 1 to 2 wt.%), silicon (about 0.5 to 2 wt.%), nitrogen (about 0.01 to 0.1 wt.%), copper (about 0.5 to 2 wt.%), and cobalt (less than about 0.5 wt.%), where the balance is iron (Fe).

A non-limiting example composition of AISI 441 used in a high temperature electrochemical cell component may be: C (about 0.03 wt.%), Cr (about 17.5 to 19.5 wt.%), Ni, Mn, Si (about 1 wt.% each), N, S (about 0.03 wt.% each), P (about 0.04 wt.%), Ti (about 0.1 to 0.3 wt.%), Nb (about 0.57 to 0.90 wt.%), where the balance is Fe (about 77 wt.%). The steel may be AISI 441 steel with the chemical formula in mol.%: Fe_{75.6}Cr_{19.4}Si_{1.9}MnNi_{0.9}Nb_{0.4}Ti_{0.3}C_{0.1}N_{0.1}P_{0.1}S_{0.1}.

The steel may be a low chromium steel having content of Cr less than about, at most about, no more than about 10, 9, 8, 7, 6, 5, 4, 3, 2, or 1 wt.%. The cell/stack may include a carbon steel with trace amounts of Cr. The carbon steel may include about, at least about, or at most about 0.02 to 2.1, 0.14 to 0.84, or 0.59 to 0.65 wt.% of C, Mn of about, at most about, or no more than about 0.3 to 1.65, 0.4 to 0.96, or 0.6 to 1.2 wt.%, Si of up to about 0.6 wt.%, and Cu of up to about 0.6 wt.%. The steel may be substantially free of Cr, Ni, Co, Ti, Nb, and/or Mo. The steel may include trace amounts of one or more of the elements named herein.

The bulk material may include non-steel metals such as aluminum-based material, for example aluminum chromium alloy. The bulk material may include nickel-based alloys, ceramic, or combination thereof.

The component 216 may include a surface portion 218. The surface portion 218 relates to a layer or film adj acent to the top of the metallic bulk portion. The surface portion may be immediately adj acent to the top of the metallic bulk portion. The layer or film may be continuous or discontinuous. The layer or film may have the same or different thickness across the area covering the bulk material. The layer or film may include at least one, more than one or one layer or film.

The surface portion may include one or more compositions structured as a getter material. The getter material may include a first getter material and a second getter material. The first and second getter materials may differ by their chemical composition, chemical, physical, mechanical properties, or a combination thereof.

The first getter material may be a sulfur getter or sulfur and chromium getter. The first getter material may be sulfur-only getter or sulfur-and-chromium getter. In other words, the first getter material may be structured to reduce/minimize/eliminate gaseous sulfur species such as SOₓ in the air upstream from the stack, in the air entering the stack, and the air in the stack within the SOFC system. The first getter material may thus prevent formation of chromium species in the hot air stream upstream from the stack, prevention of which is achieved by chemical interaction between sulfur-based impurities in the incoming air stream and the first getter material chemistry.

The first getter material may have affinity towards sulfur such that sulfur binds, reacts, sorps, absorbs, or adsorbs to the first getter material. The binding, reaction, sorption, absorption, adsorption refers to a substantial fraction of the gaseous species attaching to the first getter material such that the species are no longer in the gaseous form, being prevented from damaging the stack. Gibbs free energy change of the absorption process, which is targeted to be negative *(i.e.* thermodynamically preferred), may be used to measure the binding.

The first getter material may have affinity towards chromium as well as sulfur. The affinity towards chromium may be lower than affinity towards the sulfur.

The binding, sorption, absorption, adsorption may be irreversible such that the sulfur is bound for an extended period of time. The extended period of time may be up to lifetime of the system. The first getter material may include one or more compositions disclosed herein. The first getter material may include a mixture of compositions. The amount of individual compositions within the first getter material may be equal or different.

The sulfur getter material/surface portion may be arranged to react with one or more sulfur vapor species present in the air passing via the hotbox 208 and/or component 216. The sulfur vapors may include SOₓ and other gaseous sulfur-containing species, including, but not limited to, H₂S, H₂SO₄, SO, SO₂, SO₃, C₂H₆S, C₂H₆OS, COS, and/or CS₂. The expression SOₓ within this disclosure relates to any and all sulfur-containing gaseous species named herein. The chromium getter material/surface portion may be structured to form and/or have stable interface with the bulk material.

The getter material may include a second getter material. The second getter material may include a chromium getter material. The chromium getter material may not be a sulfur getter material. In other words, the second getter material may not have affinity towards sulfur and may not be structured to bind, sorp, absorb, or adsorb sulfur from the air/fluid present in the component or system. The second getter material may be chromium-only getter. The second getter material may be a chromium absorber.

The Cr getter material may have 3 states: (1) an empty state, for example SrCO₃ prior to its reaction with gaseous Cr, (2) a thermodynamically preferred Cr-rich state or Cr getter state, for example when exposed to gaseous hexavalent chromium CrO₂(OH)₂, CO₂ and H₂O is released, and SrCrO₄ is formed, and (3) a sulfur-rich and/or nitrate-rich state, for example when SrCrO₄ is exposed to SOₓ species and H₂O, SrSO₄ may be formed and CrO₂(OH)₂ may be released. Since Cr is significantly worse than S with respect to SOFC stack degree of poisoning, state (3) leads to aggravated stack degradation and decrease of lifetime in SOFCs.

Hence, state (3) is the state during which the previously bound hexavalent Cr is re-released into the cathode air stream and potentially leads to degradation of the stack. To prevent realization of state (3) of the Cr getter within the system, the first getter is included. Presence of the combination of the first and second getter material together allows for an irreversible absorption of Cr impurities as there is no thermodynamic driving force to release the initially absorbed air impurity (hexavalent Cr within the Cr getter), leading to a higher absorption efficiency over the lifetime of the SOFC system. Subsequently, this leads to a longer lifetime while preserving stack performance for longer. The first and second getter materials thus cooperate and work synergically to prevent degradation of the SOFC stack.

The chromium getter material/surface portion may be arranged to react with one or more chromium vapor species present in the air passing via the hotbox 208 and/or component 216. The chromium vapors may include Cr-O-(H) species, including, but not limited to, CrO, CrO₃, CrO₃H₂, CrO₄H₂, and/or CrO₃O₂. The chromium getter material/surface portion may be structured to form and/or have stable interface with the bulk material.

The first getter material, second getter material, or both may include a carbonate, oxide, or both. The first and/or second getter material may include an alkaline earth metal. The second getter material may include Be, Mg, Ca, Sr, or Ba. The first and/or second getter material may include, comprise, consist essentially of, or consist of at least one or one or more compounds having a general formula (I):

MₓA_{z}O_{y} (I),

where
M is an alkaline earth metal or alkali metal,
A is C or Cr,
x is any number between 1 and 3,
y is any number between 1 and 4,
z is any number between 0 and 1.

In the formula (I), M may be, Mg, Ca, Sr, Ba, or Li.

In the formula (I), A may be absent, A may be C or Cr.

In the formula (I), x may be 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0. In the formula (I), y may be 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0. In the formula (I), z may be 0, 0.1, 0.2, 0.3, 0.4, 0.5, 0.6, 0.7, 0.8, 0.9, or 1.0. If z is 1, y may be 3.

Non-limiting example compounds of formula (I) include BeO, MgO, CaO, SrO, BaO, BeCOs, MgCOs, CaCOs, SrCOs, BaCOs, CaCrO₄, MgCrO₄, MgCr₂O₄, BaCrO₄, or SrCrO₄.

The first and/or second getter material may include, comprise, consist essentially of, or consist of at least one or one or more phosphates, silicates, or both having a general formula (II):

LiₐA_{b}MₓO_{y} (II),

where
A is a transition metal,
M is a metalloid or reactive non-metal,
a is any number between 1 and 4,
b is any number between 0 and 2,
x is any number between 0.1 and 3,
y is any number between 1 and 6.

In the formula (II), A may be Fe, Cr.

In the formula (II), M may be Si or P.

In the formula (II), a may be 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0. In the formula (II), b may be 1, 1.1, 1.2, 1.3, 1.4, 1.5, 1.6, 1.7, 1.8, 1.9, or 2.0. In the formula (I), x may be 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0. In the formula (I), y may be 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, or 6.0.

Non-limiting example compounds of formula (II) include Li₂Fe(SiO₃)₂ or LiFePO₄.

The first getter material may include, comprise, consist essentially of, or consist of one or more ionic liquids, metal salts, or both. The first getter material may include, comprise, consist essentially of, or consist of one or more compositions structured to absorb or convert NOx such as a platinum-group-metal catalytic converter.

The second getter material may include one or more compositions including one or more conventional Cr getter compositions that are already known, such as alkaline earth oxides, alkaline earth carbonates, transition metal oxides, or a combination thereof.

The getter materials may include a mixture or combination of the compositions disclosed herein such that the mixture may include 1, 2, 3, 4 ,5 ,6 7, 8, 9, 10, or more compositions within at least one or in each getter layer/zone/material.

In one or more non-limiting example embodiments, the first getter material includes CaO, MgO, CaCOs, MgCOs, or their combination, and the second getter material includes BaO, SrO, BaCO₃, SrCOs, or their combination. In another non-limiting example embodiments, the first getter material may include Li₂Fe(SiO₃)₂ or LiFePO₄, or both, and the second getter material may include BaO, SrO, BaCO₃, SrCOs, or their combination. In yet another non-limiting example, the first getter material may include MgO, a metal salt, and the second getter material may include SrCO₃. In yet another non-limiting example, the first getter material may include CaO and MgO, and the second getter material may include SrCO₃ and BaCO₃.

In a non-limiting example, at some point in its lifetime, the system may include a composite of (Sr,Ba)CrO₄ and (Mg,Ca)O and/or (Mg,Ca)CO₃. This material is capable of absorbing sulfur without releasing Cr, rather than the conventional SrCrO₄ which may release Cr.

One or more compounds identified within the formulas (I), (II), may be expressly excluded from the first getter material, second getter material, or both, disclosed herein. The exclusions may be, for example, due to toxicity or environmental concerns.

The material of formulas (I), (II), or both, may be further modified to include an oxygen vacancy of at least 10% off-stoichiometry to enhance gas diffusion. The materials may thus be off stoichiometric. The getter materials identified herein may be used to react with the identified gaseous species including Cr such as CrO₂(OH)₂ to lower/minimize/eliminate the concentration of Cr⁶⁺ in the cathode air stream.

The getter material may include one or more sacrificial compounds incorporated in the cathode air stream. "Sacrificial" relates to a compound that is consumed by the reactions and is not further present in the system in its original chemical form after the reaction(s) the compound is part of take place. The sacrificial compound may be reactive or highly reactive with the hexavalent gaseous species and/or SOₓ species such that any gaseous chromium/SOₓ would be further converted into benign species. The product of the reaction of the sacrificial compound and the gaseous Cr/SOₓ may be stored within the system, component including the sacrificial compound, or both. The product may stay within the system in an irreversibly solid state for a predetermined period of time. The period of time may be or be up to the lifetime of the system. Alternatively, the product, once accumulated within the component, may be removed as part of a replacement process of the component.

Alternatively, or in addition, the component 216 may include a structure 220 including the getter material. A non-limiting example system with the structure 200 is shown in Fig. 4B. The system 200 depicted in Fig. 4B includes the separate structure 220 within the component 216. The structure is upstream from the stack 202 and downstream from the heat exchanger 214. The structure 200 may be a honeycomb, porous, or ceramic structure including a bulk portion, which may be, for example alumina. The porous structure may have pore sizes of about 1 µm - 5 cm, 10 µm - 500 µm, or 100 µm - 200 µm. The porous structure may have pore sizes of about, at least about, or at most about 1, 10, 50, 100, 150, 200, 250, 300, 350, 400, 450, 500, 550, 600, 650, 700, 750, 800, 850, 900, 950, or 1000 µm. The structure may include a surface portion 218 described above. The porous structure may be located in the flow path of the component 216 such that the air influx pushes through the pores of the structure. The relatively high surface area of the structure may assist with the capture of the unwanted species in the air.

The getter material may be distributed in the component 216 evenly throughout the length, volume, and/or area of the component 216. Alternatively, the getter material may be accumulated predominantly adjacent to the heat exchanger 214. At least some portions of the component 216 may be free of the getter material. The getter material may be applied as a washcoat on the bulk portion or on the surface of the honeycomb structure 220. The washcoat may be provided, for example via solution deposition. The washcoat may be annealed at a temperature at or above about 100°C to reduce a number of defects in the washcoat.

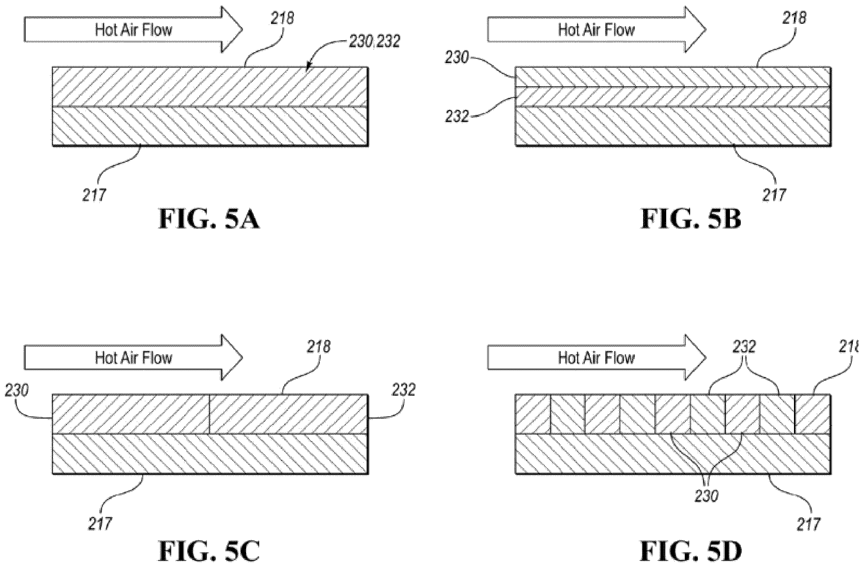

The getter material, as the surface portion, may be applied in layers onto the bulk portion. For example, the surface portion may include 1, 2, 3, 4, 5, 6, 7, 8, 9, 10, or more layers of the getter material. Each or at least some of the layers may include both the first and second getter material. The getter material may be mixed within the layers. As a result of such application, each layer may include the first getter material and the second material. The amounts of each getter material may be even or uneven. A non-liming example of such arrangement can be seen in Fig. 5A, in which the bulk material 217 is schematically shown to carry the surface portion 218 including the first getter material 230 and the second getter materials 232 intermixed with each other or forming a composite.

Alternatively, the placement of the first and second getter material within the layers may be specifically designed to achieve a goal of maximizing the amount of poison species capture such as forming a sulfur-getter zone and a chromium-getter zone. Non-limiting example embodiments of the zone layering are shown in Figs. 5B, 5C, and 5D. The layers may be detectably discreet layers. Since the main concern is lifetime performance of the system, and especially middle and end life of the SOFC system, the getter zones may be designed to combat sulfur-mediated or sulfur-induced chromium release. As such, in the example embodiment of Fig. 5B, the first getter material may be provided in the top layer to preferentially capture the sulfur species to prevent sulfur-mediated chromium release from the second getter material. The surface area of the first getter is thus maximized.

In the example embodiment depicted in Fig. 5C, as the air influx with impurities encounters the surface portion with the getters, the air first contacts the first getter with S-binding material. Subsequently the air proceeds to the second getter material binding the chromium. The sulfur getter is thus located upstream from the chromium getter. Since the air is free or substantially free from the sulfur gaseous species after interaction with the first getter material, the absorption of chromium into the second getter is irreversible.

Fig. 5D show a yet another non-limiting example of the zone placement of the first and second getter materials. In the embodiment shown in Fig. 5D, the first and second getter zones alternate such that any sulfur and chromium present in the air influx can be captured within the surface portion. The sulfur getter and the chromium getter are provided in an alternating order/zones.

A method of resisting/decreasing/minimizing/reducing/eliminating Cr in the inlet air stream/cathode air stream is disclosed herein. The method may include resisting/preventing sulfur-mediated chromium release from a solid source within the system. The resisting of release of the Cr absorbed into the Cr getter may be operative throughout the SOFC system lifetime. The solid source may be a chromium getter previously binding Cr. The method may include incorporating one or more getter materials within the system upstream of a cathode, cell, stack. The method may include utilizing a first getter material as a S getter, capturing one or more gaseous SOₓ species from the air stream downstream from a heat exchanger. The method may include utilizing the first getter material predominantly during the middle and end of the life of the system when the S concentration is increased in comparison with the beginning of life of the system. The method may prevent reaction of a Cr getter material with water and SOₓ species resulting in unwanted release of CrO₂(OH)₂ from a Cr getter material.

The method may include utilizing more than one type of a getter material, for example a first getter material which is a S getter or absorber and a second getter material which is a Cr getter or absorber. The method may include providing the first and second getter material in layers, patterns, zones, as was described above.

The method may include using at least some of the getter materials as sacrificial materials. The method may include binding, sorping, absorbing, adsorbing or reacting with hexavalent Cr and/or SOₓ species in a solid form within a component including the getter material(s). The method may include binding the S species, Cr species, or both irreversibly. The method may include preventing release of previously bound Cr from a getter material within the component. The method may also include capturing gaseous Cr species from the air stream prior to the species entering the stack, cell, cathode. The method may include accumulating the SOₓ species, Cr species, in a solid form and retaining the species in their solid form for a period of time which may be up to the lifetime of the system. The method may include replacing a component containing the accumulated species to remove the species from the system, to replenish the getter materials within the system, or both.

The method may include producing the component including the surface portion having one or more materials of formulas (I), (II), additional material named herein, or a combination thereof. The method may further include manufacturing at least one component having the one or more compositions disclosed herein. The method may include providing a predetermined amount of the one or more compounds of the formulas (I), (II), additional material named herein, or a combination thereof, in the surface portion on the metallic bulk portion of a component of the system, the component being located upstream from a cathode, cell, stack, or a combination thereof.

The method may include utilizing one or more techniques to deposit the materials of the formulas (I), (II), and/or additional material named herein, or a combination thereof on the component. The method may include washcoating one or more internal surfaces or bulk portion of the component. The method may include providing the disclosed getter materials along the entire surface of the component or portion(s) of the surface of the component. The method may include providing the getter materials in patterns, zones, layer, as described above, with the same or different thickness throughout the application area.

The method may include forming a separate structure such as a honeycomb structure and washcoating the getter materials onto the structure, in patterns, layers, zones, as was described above. The method may include providing the structure with the getter materials within the component of the system, the structure and component being located upstream of a cathode, cell, stack, or a combination thereof.

The advantage of the herein-described system lies in elimination/reduction of overall hexavalent chromium entering the stack, thus preventing or reducing chance of stack degradation and increasing its lifetime. Another advantage lies in reducing the chance of reversible Cr binding within the system upstream of the stack via preventing or minimizing sulfur-mediated release of Cr from a Cr getter.

### Experimental Section

The one or more oxides of formula (I) were identified using publicly available materials database to screen for the optimal materials, and high-throughput (HT) first-principles density functional theory (DFT) was used to calculate the results to evaluate and identify suitable getters materials.

The following screening criteria were used:
(a) Total energy of a computed structure (typically in eV/atom or eV) describes the computed energy of a structure; the differences between structures correspond to a reaction energy between those structures. For example, the reaction *A* → *B* has a reaction energy *E_{B}* - *E_{A}* (where the energies might be written in kJ/mol);
(b) Convex-hull decomposition (or decomposition) - the convex hull of all stable compositions may be constructed such that each chemical composition C has a minimum combination of stable states, *C* → *A* + *B,* where the stoichiometric formula of C is equal to the sum of A and B, and there is no other A'+B' that has a lower energy. Then A+B is the convex-hull decomposition products of C. If the energy of C is known, then the hull energy or decomposition energy (typically eV/atom or eV) is *Eₕ* = *E_{C}* - *E_{A}* - *E_{B}* and is always a nonnegative number. In some conventions it is reported as the reaction energy *Eᵣₓₙ = E_{A}* + *E_{B}* - *E_{C}* and is always a nonpositive number.

The screening-gained information was used to explore various classes of chemicals: known materials whose DFT structure can be computed; typically single-crystal or gas-phase molecules as well as compositional formulas, even if the atomic structure is not known, as long as related structures are available in a database. This includes: adjusting compositional ratios, such as excess oxygen or oxygen vacancies and dopants and substitutions.

Several properties were computed:
1. Stability at a fixed temperature - this can be given by the hull energy; if it is less than the temperature (times the Boltzmann constant k_{B}), then it is stable. Alternatively, it can be computed by the oxygen chemical potential, which can be benchmarked to temperature at a known scale.
2. Filtering by atom size, oxidation state, metal-oxygen ratio, crystal structure, spacegroup, elements, *etc.*
3. Elemental material cost, per mol or per kg.
4. Reactivity screening, which is the likelihood of a reactivity between the composition C and a reactant R. Using the convex-hull methodology, the reactivity can be computed by examining (1) the decomposition products of a composition *C* + *x R* and (2) the relative decomposition energy of *ε*(*x*) = *E*(*C* + *x R*) - *E*(*C*) - *x E*(*R*) (a nonpositive number). The most stable reaction is the one that has the minimum ε, while the dilute limit is the lowest value of x that has a nonzero ε.

Subsequently, the reactivity was benchmarked to a known material C' using the following two quantities:
(a) At which molar fraction x does the reaction occur? A higher reactivity is associated with a higher value of *x*, *i.e.* more of the reaction occurs per molar unit of C (or C'). A typical metric here is: RR_{stoich} = x_{C} / x_{C'}, where C' is the reference material and RR stands for the relative reactivity.
(b) What is the relative decomposition energy ε? A higher reactivity is associated with a lower value of ε (higher absolute value), *i.e.* the reaction is more energetically favorable. A typical metric here is: RRₑₙ = ε_{C} / ε_{C'}, where C' is the reference material. It can also be: *RRₑₙ =* (*ε_{C'}* - *ε_{C}*)/*k_{B}T*, where k_{B} is the Boltzmann constant and T is the absolute temperature.

### Screening 1

Screening 1 focused on identification of materials of the first getter material that react with CrO₂(OH)₂ (80% rel. to SrCOs) and do not react with SO₂ (150% rel. to SrCOs). Additional considerations included the following conditions: reactivity with NOₓ, H₂O, temperature, cost, and no chlorides or fluorides.

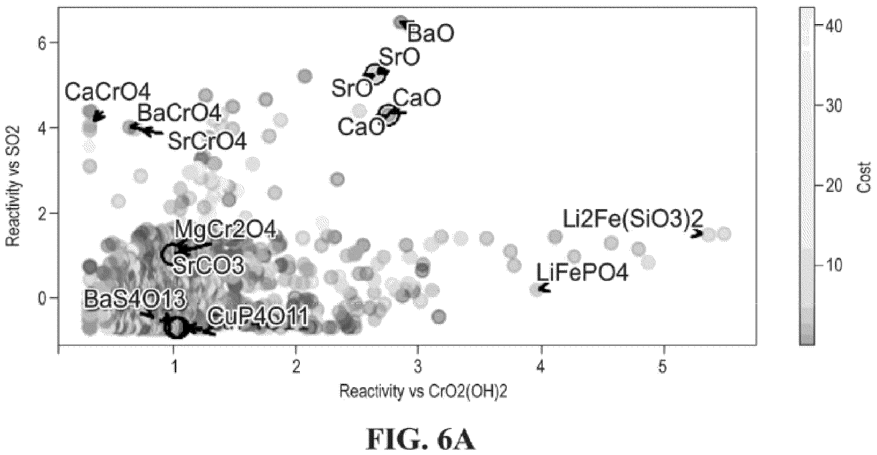

The screening criteria generated 1037 materials shown in a scatterplot of Fig. 6A. The scatterplot summarized results by reactivity with SO₂, reactivity with CrO₂(OH)₂, and cost of the material. The more suitable candidates are located in the bottom right corner of the scatterplot.

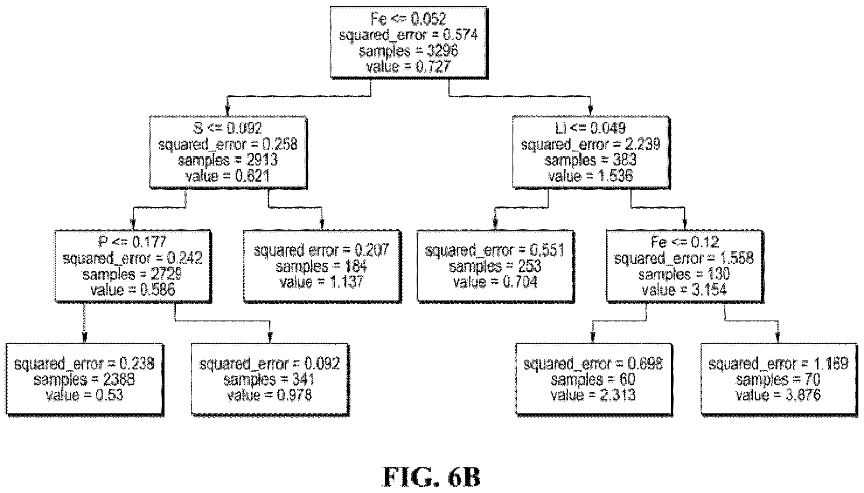

A decision tree analysis was applied to filter out additional materials. The decision tree was trained on the overall reactivity metric. Fig. 6B shows the decision tree as learned. Darker squares indicate more preferred reactions and less undesired reactions. The figure of merit ("value") is the R_{Cr}-0.5*Rs, where a higher number (darker box) is more desirable.

### Screening 2

Screening 2 focused on identification of materials with chromium that are unlikely to react with SO₂ (110% rel. to SrCO₃). Additional considerations included the following conditions: reactivity with NOₓ, H₂O, temperature, cost, and no chlorides or fluorides.

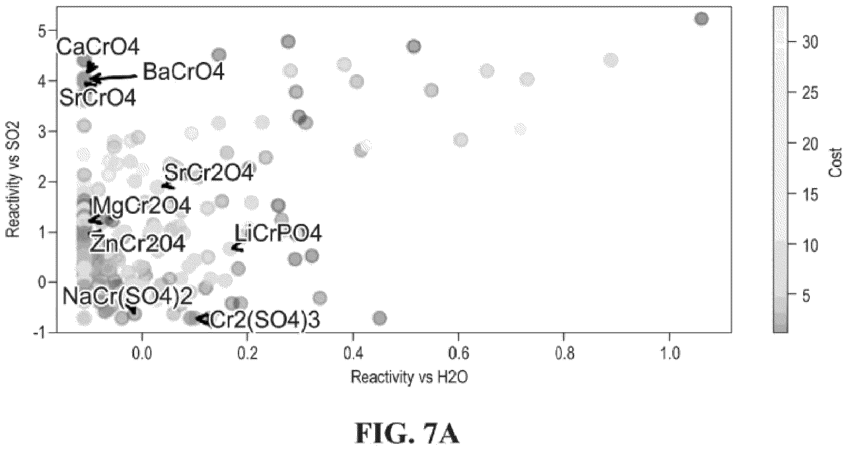

The screening criteria generated 117 materials shown in a scatterplot of Fig. 7A. The scatterplot summarized results by reactivity with SO₂, reactivity with H₂O, and cost of the material. The more suitable candidates are located in the bottom left corner of the scatterplot. Materials including S, P, or both were identified as desirable.

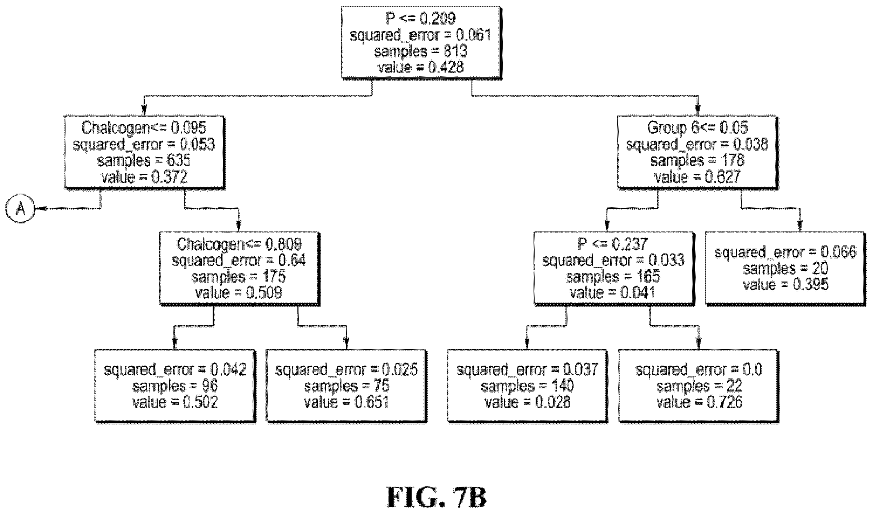

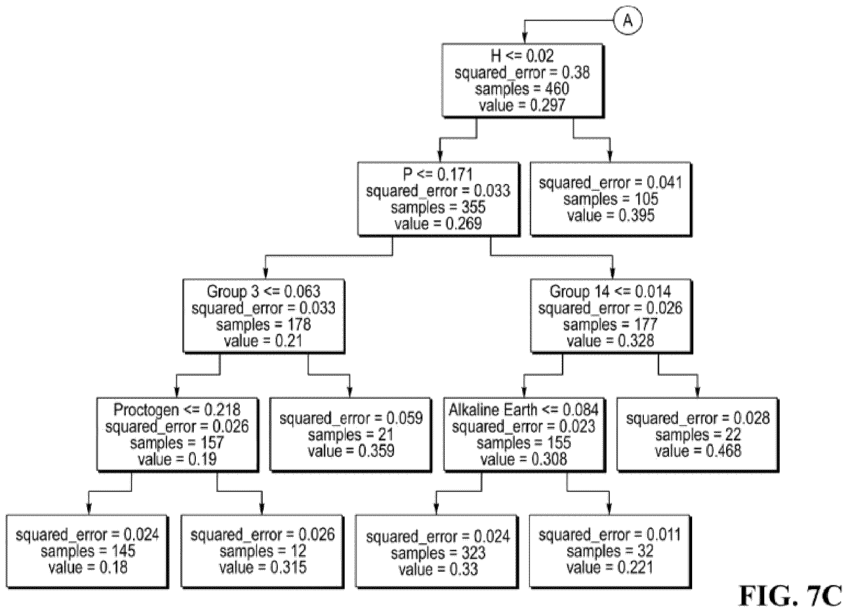

A decision tree analysis was applied to filter out additional materials. The decision tree was trained on the overall reactivity metric. Figs. 7B and 7C show the decision tree as learned. Darker squares indicate more preferred reactions and less undesired reactions. The figure of merit ("value") is - 1*Rs, where a higher number (darker box) is more desirable.

### Screening 3

Screening 3 focused on identification of possible new materials that are likely to react with SO₂ (200% rel. to SrCOs) and have a relatively low cost.

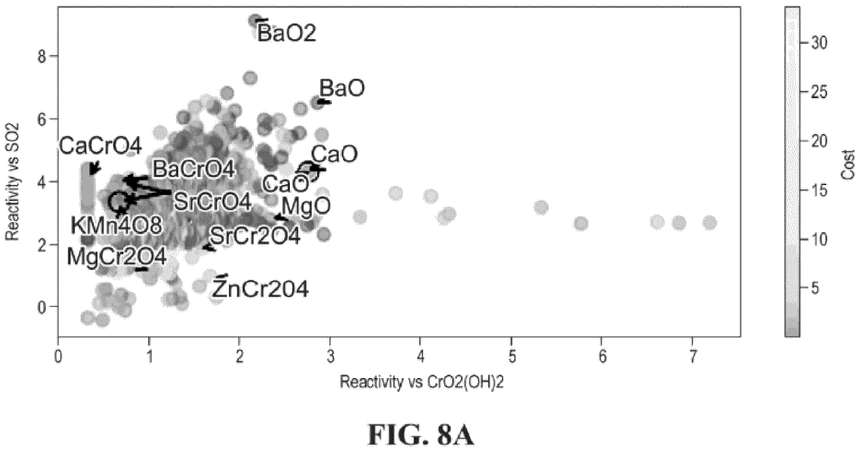

The screening criteria generated 925 materials shown in a scatterplot of Fig. 8A. The scatterplot summarized results by reactivity with SO₂, reactivity with CrO₂(OH)₂, and cost of the material. The more suitable candidates are located in the top portion of the scatterplot. Alkali earth metals were identified as desirable.

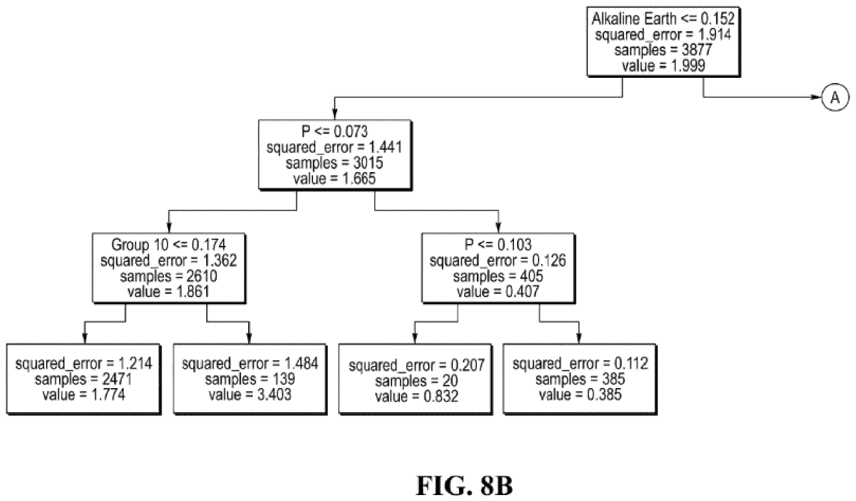

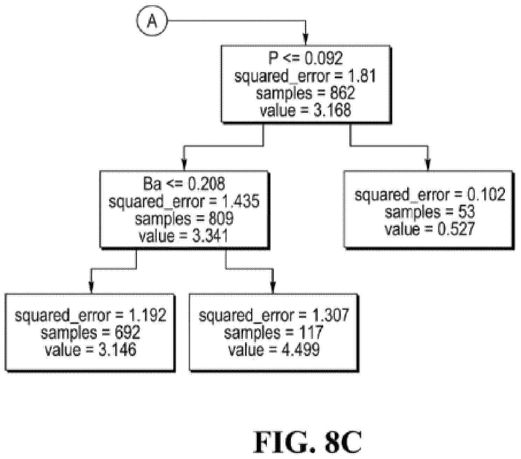

A decision tree analysis was applied to filter out additional materials. The decision tree was trained on the overall reactivity metric. Figs. 8B and 8C show the decision tree as learned. Darker squares indicate more preferred reactions and less undesired reactions. The figure of merit ("value") is Rs, where a higher number (darker box) is more desirable.

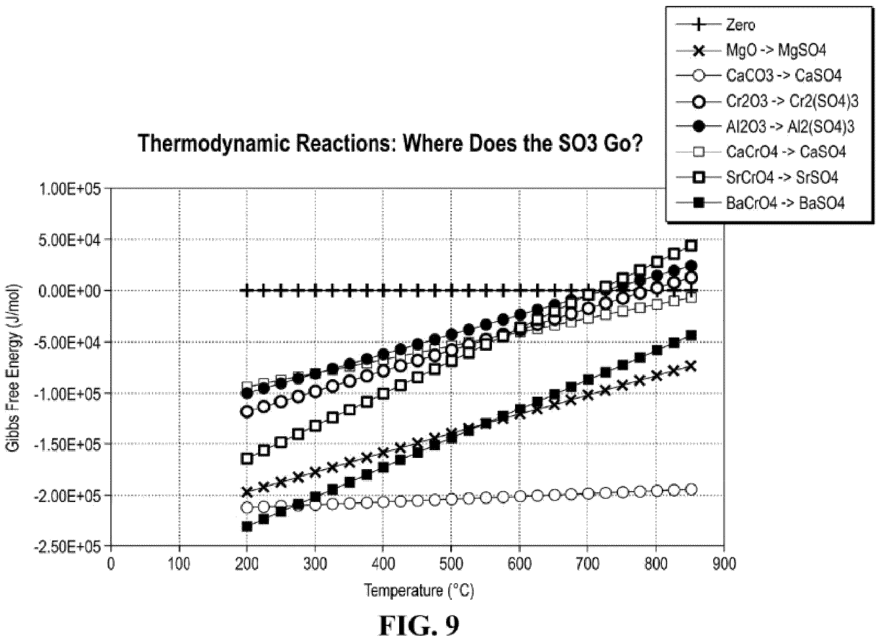

The analysis further studied the Gibbs free energy of formation of various reactions consuming SO₃. Excess sulfur, if present in the component, is presumed to preferentially interact with the compositions as shown in the plot of Fig. 9. As can be seen from the plot of Fig. 9, the probability of the reactions of S with various materials listed below is in the following order of thermodynamic preference:
(1) CaCOs - assuming it is not already chromated, highly likely to form a sulfate, CaCO, → CaSO₄;
(2) MgO - thermodynamically unlikely to form a carbonate, unlike other alkali earth oxides, MgO → MgSO₄;
(3) BaCrO₄ - may be used as a sacrificial material, reaction BaCrO₄ → BaSO₄;
(4) Other alkali earth chromates, CaCrO₄ → CaSO₄, SrCrO₄ → SrSO₄;
(5) Chromia and alumina, Cr₂O₃ → Cr₂(SO₄)₃, Al₂O₃ → Al₂(SO₄)₃.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the disclosure that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. A solid oxide fuel cell (SOFC) system comprising:
a SOFC stack;
a component located upstream from the SOFC stack and downstream from a heat exchanger, the component including
a bulk portion; and
a surface portion adjacent the bulk portion and having a combination of a sulfur getter material and a chromium getter material, the sulfur and chromium getter materials having different chemical compositions, the chromium getter being an absorber of hexavalent gaseous chromium and the sulfur getter being an absorber of sulfur-containing gaseous species.

2. The SOFC system of claim 1, wherein the chromium getter material is not a sulfur absorber.

3. The SOFC system of claim 1, wherein the sulfur getter material is a sulfur and chromium absorber.

4. The SOFC system of claim 1, wherein the sulfur getter material has a lower affinity to chromium than sulfur.

5. The SOFC system of claim 1, wherein presence of the sulfur getter material within the combination renders the chromium getter material an irreversible chromium absorber.

6. The SOFC system of claim 1, wherein the sulfur getter material includes one or more than one composition having formula (I):
MₓC_{z}O_{y} (I),
where M is an alkaline earth metal or alkali metal,
x is any number between 1 and 3,
y is any number between 1 and 4,
z is any number between 0 and 1.

7. The SOFC system of claim 1, wherein the sulfur getter material includes one or more than one composition having formula (II):
LiₐA_{b}MₓO_{y} (II),
where
A is a transition metal,
M is a metalloid or reactive non-metal,
a is any number between 1 and 4,
b is any number between 0 and 2,
x is any number between 0.1 and 3,
y is any number between 1 and 6.

8. The SOFC system of claim 1, wherein the sulfur getter material includes CaO, MgO, CaCOs, MgCOs, CaCrO₄, MgCrO₄, MgCr₂O₄, or their combination, and the chromium getter material includes BaO, SrO, BaCOs, SrCOs, BaCrO₄, SrCrO₄, or their combination.

9. A SOFC component comprising:
a bulk portion; and
a surface portion having a combination of a sulfur absorber material and a chromium absorber material, the sulfur and chromium absorber materials having different chemical compositions from one another, the combination of the absorber materials resulting in an irreversible binding of hexavalent gaseous chromium into a solid form within the component, the chromium absorber material being arranged in direct contact with the bulk portion and the sulfur absorber material.

10. The SOFC component of claim 9, wherein the sulfur absorber material and the chromium absorber material form detectably discrete layers.

11. The SOFC component of claim 9, wherein the chromium absorber is sandwiched between the bulk portion and the sulfur absorber.

12. The SOFC component of claim 9, wherein the sulfur absorber and the chromium absorber are located on the bulk portion in an alternating order.

13. The SOFC component of claim 9, wherein the sulfur absorber forms a zone upstream of the chromium absorber.

14. The SOFC component of claim 9, wherein the sulfur absorber includes a carbonate or an oxide having formula (I):
MₓA_{z}O_{y} (I),
where
M is an alkaline earth metal or alkali metal,
A is C or Cr,
x is any number between 1 and 3,
y is any number between 1 and 4,
z is any number between 0 and 1.

15. The SOFC component of claim 9, wherein the sulfur getter material includes CaO, MgO, CaCOs, MgCOs, CaCrO₄, MgCrO₄, MgCr₂O₄, or their combination, and the chromium getter material includes BaO, SrO, BaCOs, SrCOs, BaCrO₄, SrCrO₄, or their combination.

16. A method of resisting release of hexavalent gaseous chromium from a chromium getter material, the method comprising:
forming a synergistic combination of getter materials to ensure irreversible binding of gaseous hexavalent chromium within a SOFC system by
providing a chromium getter material within the system, upstream from a cathode, and
providing a sulfur getter material within the system, adjacent the chromium getter material; and
providing air to the system, increasing a temperature of the air, and contacting the air with the chromium getter and the sulfur getter such that the chromium getter absorbs gaseous hexavalent chromium into a solid form and the sulfur getter absorbs sulfur-containing gaseous species into a solid form to prevent a reaction of the sulfur-containing gaseous species with the chromium absorbed into the chromium getter.

17. The method of claim 16, wherein the resisting is operative throughout the SOFC system lifetime.

18. The method of claim 16, further comprising arranging the sulfur getter upstream from the chromium getter.

19. The method of claim 16, wherein the forming of the synergistic combination includes providing a chromium getter of a different chemical composition than the sulfur getter.

20. The method of claim 16, further comprising arranging the chromium and sulfur getter material downstream from a heat exchanger.
